# EUROPEAN PATENT APPLICATION

(11) **EP 2 654 275 A1**
(43) Date of publication of application: **23.10.2013**
(21) Application number: 13151530.6
(22) Date of filing: 16.01.2013
(51) Int. Cl.: H04M 1/725, G06F 11/08

(54) **System and method for transmitting application data between two communication devices**

(30) Priority: 21.04.2012 US 201261636643 P
(71) Applicant: BlackBerry Limited, Waterloo, ON N2L 3W8 (CA)
(72) Inventor: Sibbald, Martyn Edward, Fredericton, New Brunswick E3B 1B8 (CA)
(74) Representative: Moore, Barry

(57) **Abstract**

The disclosure recites a system and method for transmitting data from a first communication device (110a) to a second communication device (110b). The method comprises: accessing (402) data relating to applications installed on the first communication device (110a); upon activation of a transmit command at the first communication device (110a), preparing the data for transmission (404) to the second communication device (110b); and upon establishment (406) of a communication channel between the first communication device (110a) and the second communication device (110b), transmitting (408) the data from the first communication (110a) device to the second communication device (110b) over the communication channel. In the method, the data provides content identification data for the applications; and the applications are stored on a server for retrieval by the second communication device (110b) using the content identification data.

## Description

### RELATED APPLICATION

This patent application claims priority from US provisional patent application serial no. 61 / 636,643 filed on April 21, 2012.

### FIELD OF DISCLOSURE

The disclosure provided herein generally describes a system, method and devices for transmitting data, such as applications and / or related data, between two or more communication devices. In particular, data that identifies an application stored on one device can be selectively transmitted to another device using a communication technology, such as a near field communication (NFC) technology.

### BACKGROUND OF DISCLOSURE

Communication devices perform a variety of functions to enable mobile users to stay organized and in contact with others in a communication network through e-mail, schedulers and address books. Such devices typically can access a server and download applications from the server to the device for installation on the device.

A user of a communication device may desire awareness of one or more applications that have been installed on a colleague's communication device. Currently, in order to obtain data required to identify and receive the application, the user needs to manually have his device identify and obtain a copy of the application from the related source. If there are several applications that the user wishes to obtain, the process of identifying, tracking and requesting all of the applications may become cumbersome.

There is a need for a system and method which addresses deficiencies in the prior art.

### BRIEF DESCRIPTION OF THE DRAWINGS

Embodiments of the invention will now be described, by way of example only, with reference to the accompanying drawings, in which:

Fig. 1 is a schematic diagram of a wireless communication network having a first communication device communicating with a second communication device according to an embodiment;

Fig. 2 is a schematic representation of the first communication device of Fig. 1 according to an embodiment;

Fig. 3 is a schematic representation of the first communication device and the second communication device of Fig. 1 communicating with each other to transmit data from the first communication device to the second communication device according to an embodiment;

Fig. 4 is a flowchart of exemplary processes executed by the first communication device in transmitting data to the second communication device of Fig. 1 according to an embodiment;

Fig. 5 is a schematic representation of a set of output screens generated on a display in a graphical user interface (GUI) of the first communication device of Fig. 1 while transmitting data from the first communication device to the second communication device according to an embodiment;

Fig. 6 is a flowchart of exemplary processes executed by the second communication device in receiving data from the first communication device of Fig. 1 according to an embodiment;

Fig. 7 is a schematic representation of a set of output screens generated on a display in a GUI of the second communication device of Fig. 1 during and after receiving data from the first communication device according to an embodiment; and

Fig. 8 is a block diagram of certain internal components of the first communication device of Fig. 1.

### DESCRIPTION OF EMBODIMENTS

Exemplary details of embodiments are provided herein. The description which follows and the embodiments described therein are provided by way of illustration of an example or examples of particular embodiments of principles of the present disclosure. These examples are provided for the purposes of explanation and not limitation of those principles and of the disclosure. In the description which follows, like parts are marked throughout the specification and the drawings with the same respective reference numerals.

Generally, an embodiment provides a system and method for transmitting data from a first communication device, as a transmitting device, to a second communication device, as a receiving device. As such, an embodiment also provides receiving data at the second communication device from the first communication device. In one embodiment, the first communication device has one or more applications (often referred to herein as "apps"), music files, video files, configuration files, etc. installed thereon. For the sake of convenience and not limitation, the terms "app" or "application" are used to refer to any application, but use of the terms also includes a reference to any file or data. The apps may be provided on one or more server(s) in whole and / or in part. These apps have been downloaded from an app server or have been otherwise provided and installed on it. The second communication device may have a need for one or more of the apps installed on the first communication device. An embodiment provides a protocol, system and method for transmitting the apps and / or content identification information relating to the apps from the first communication device to the second communication device. An embodiment may also provide a protocol, system and method for receiving the apps and / or content identification information relating to the apps at the second communication device from the first second communication device. Depending on the content of the transmitted data, the second communication device can then install the app directly or initiate a download request to the app server to receive a local copy of the app. Transmissions can be provided over a communication network, and may follow NFC protocols. Other communication networks may be provided. Other data can be transmitted and / or received. There may be several different app servers providing different sets of apps.

In a first aspect, a method for use by a first communication device of transmitting data relating to the first communication device to a second communication device is provided. The method comprises upon detection of a trigger condition: identifying a list of applications available for download from the first communication from the applications installed on the first communication device or on a server based on a filter of applications installed on the first communication device or on a server; and transmitting the list of applications and initial header data indicating an expected length and contents of the applications in the list and a code check. Further, the method comprises upon activation of a transmit command at the first communication device: identifying an application in the list for transmission to the second communication device; and transmitting the application to the second communication device.

In the method, the filter may include in the list applications stored on the first communication device that have a threshold of recommendations from a social network site.

The method may further comprise upon activation of the transmit command at the first communication device, charging a first account associated with the second device with a payment for the application.

The method may further comprise upon activation of the transmit command at the first communication device applying to a second account associated with the first device a credit for transmitting the application.

The method may further comprise upon activation of the transmit command at the first communication device applying to license associated with the application to the second device.

In the method, the trigger condition may be to have a second application operating on the second device reach a predetermined stage or having an account associated with the second device reach a predetermined level.

In the method, the trigger condition may be detection of the first device or the second device in a predetermined location or detection of a Wi-Fi communication link available to the first device or the second device.

In the method, part of the application may be provided to the second device through a peer-to-peer network.

In the method, the application may be provided to the second device from the server.

In the method, the filter may include in the list all applications stored on the first communication device that were obtained from the server or applications stored on the first communication device that meet a preselected criteria.

The method may further comprise at the second communication device: upon completion of receipt the list from the first communication device, checking whether the list has been properly received by the second communication device using the code check provided in the initial data header; and when the code check fails, requesting that the first communication device re-transmit the list.

The method may further comprise at the second communication device generating on a GUI on a display of the second communication device the list, the GUI providing an option to retrieve an application from the list from the server for the second communication device.

In the method, when the option to retrieve the application on the GUI on the display of the second communication device is activated, the server may evaluate whether the second communication device meets criteria for receiving the application; and when the second communication device meets the criteria, the server may transmit the application to the second communication device.

In the method, the server may track a record of providing the application to the second communication device as a referral provided by the first communication device.

In the method, the filter may include in the list a selection of all applications stored on the first communication device that were obtained from the server and applications stored on the first communication device that meet a preselected criteria.

In another aspect, a method of transmitting data from a first communication device to a second communication device is provided. The method comprises: accessing data relating to applications installed on the first communication device; upon activation of a transmit command at the first communication device, preparing the data for transmission to the second communication device; and upon establishment of a communication channel between for the second communication device, transmitting the data to the second communication device over the communication channel. In the method, the data provides content identification data for the applications; and the applications are stored on a server for retrieval by the second communication device using the content identification data.

In the method, the communication channel may be a NFC technology between the first communication device and the second communication device; and the data may be transmitted from the first communication device to the second communication device over the communication channel.

In the method, the list may be stored on the first communication device.

The method may further comprise at the second communication device, generating on a GUI on a display of the second communication device a list identifying the applications installed on the first communication device, the GUI providing an option to retrieve an application of the applications from the server for the second communication device.

In the method, the server may track a record of providing the application to the second communication device as a referral provided by the first communication device.

In another aspect, a communication device in a communication network is provided. The communication device comprises: a memory device storing applications and data relating to the applications installed on the communication device; a processor; an application management module providing instructions to the processor to upon detection of a trigger condition, identify a list of applications available for download from the communication from the applications installed on the communication device or on a server based on a filter of applications installed on the first communication device or on a server and transmit the list of applications and initial header data indicating an expected length and contents of the applications in the list and a code check and upon activation of a transmit command at the communication device identify an application in the list for transmission to the second communication device and transmit the application to a second communication device.

In the communication device, the filter may include in the list applications stored on the communication device that have a threshold of recommendations from a social network site.

For the communication device, the second communication device: upon completion of receipt the list transmitted from the communication device, may check whether the list has been properly received by the second communication device using the code check provided in the initial data header; and when the code check fails, may request that the communication device re-transmit the list.

In the communication device, the server may track a record of providing the application to the second communication device as a referral provided by the communication device.

In the communication device, the list may be transmitted from the server to the second communication device.

For the communication device, the communication channel may be a NFC technology between the communication device and the second communication device; and the data may be transmitted from first communication device to the second communication device over the communication channel.

For the communication device, the transmission module may provide further instructions to the processor to transmit with the list, initial header data indicating an expected length and contents of the data and a code check.

For the communication device, the data may be stored on the communication device; the list may relate to all applications stored on the communication device that were obtained from the server or applications stored on the communication device that meet a preselected criteria; and the GUI may provide a single activation action to initiate the transmit command.

For the communication device, upon completion of receipt the data transmitted from the communication device, the second communication device may check whether the data has been properly received by the second communication device using the code check provided in the initial data header; and when the code check fails the second communication device may request that the communication device re-transmit the data.

For the communication device, the server may track a record of providing the application to the second communication device as a referral provided by the communication device.

In another aspect, a method for use by a first communication device of receiving data relating to a second communication device from the second communication device is provided. The method comprises: upon detection of a trigger condition, identifying a list of applications available for download from the second communication from the applications installed on the second communication device or on a server based on a filter of applications installed on the second communication device or on a server and receiving a transmitted list of applications and initial header data indicating an expected length and contents of the applications in the list and a code check at the first communication device; generating an import application list from the list of applications that includes applications from the list of applications that are not currently installed on the first communication device and that are permitted to be installed on first communication device; generating the import application list on a display of the first communication device in a GUI; and generating an option in the GUI to allow selection one or more of applications in the import application list for selection to be downloaded to the first communication device.

In other aspects, various combinations of sets and subsets of the above aspects are provided.

Now, details are provided on an exemplary network and devices in which an embodiment operates.

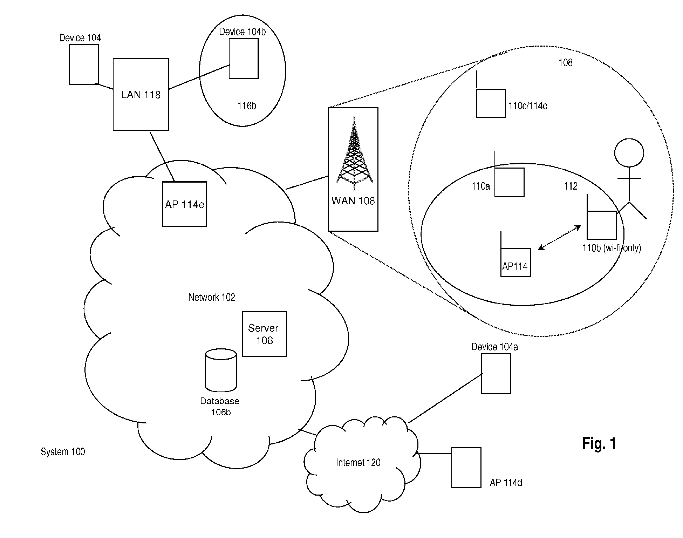

Referring to Fig. 1, details on a system of exemplary networks and communication devices according to an embodiment are provided. Fig. 1 shows communication system 100 where network 102 provides access to a suite of applications, services and data to its connected devices 104 through its associated servers. Network 102 can be implemented in any known architecture, providing wired and / or wireless connections to its elements. It will be appreciated that in other embodiments, various networks and subnetworks as described herein may be incorporated into other networks.

In network 102, one or more interface servers (not shown) provide hardware and software systems to allow network 102 to communicate with other networks. Some exemplary networks that are connected and connectable to network 102 are described.

Server 106 in network 102 provides access to files, data, applications and other materials stored thereon to devices in system 100 that can connect to network 102. In one embodiment, server 106 is an application server that stores program applications that can be downloaded and installed locally on devices that connect to server 106. There may be additional servers (not shown) in system 100 that provide additional data, applications and /or files that can be accessed separately from server 106.

A wireless network provides wireless communication coverage to devices that are located within the wireless transmission area of the WAN. In Fig. 1, one exemplary wireless network is a Wide Area Network (WAN) 108. Devices 110 have wireless communication capabilities with one or more wireless networks (described later). WAN 108 may have multiple transmission areas by having multiple communication towers. A WAN network can be provided by a cellular communications company, such as Verizon (trademark). Devices 110 may connect directly or indirectly to network 102 and server 106. Devices 110 may be referred to as "communication devices" or simply "devices". Devices 110 may transmit and receive data from other devices.

Network 112 is a Wi-Fi network generally following standards set by the IEEE LAN/MAN Standards Committee, known as IEEE 802, through its working group "11". The 802.11 standard defines media access control (MAC) and physical (PHY) layers in the OSI protocol model for WLAN. The family of 802.11 amendments is sometimes referred to as the 802.11 x family. Currently, the 802.11 amendments encompass six wireless modulation techniques that all use the same communication protocol among their communicating elements. Other modulation techniques may be used. Current versions of 802.11 networks include: 802.11 a, b, g and n, representing PHY amendments to IEEE 802.11. Specific transmission details and parameters of these networks and channels are known to those of skill in the art.

Wireless devices 110 communicate with each other through the data link layer in network 112. In an exemplary environment, network 112 is a local, geographically small, wireless network. Wireless devices 110 include handheld devices, cell phones and computers (either desktop or portable) having a (wireless) network card, network adapter and / or network interface controller ("NIC") installed therein.

Network 112 includes access point (AP) 114 and supporting radio transmission equipment known to those skilled in the art. In network 112, AP 114 is a communication device that contains an IEEE 802.11 radio receiver/transmitter (or transceiver) and functions as a bridge between network 112 and other networks (such as network 102, LAN 106 and / or network 108) for its carried communications. AP 114 provides data distribution services among devices 110 within network 112 and between devices 110 in network 112 and other devices in other connected networks. AP 114 may be a non-fixed wireless device, and as such AP 114 is effectively another device 110. Functionalities for AP 114 may be provided in devices 110. For example, device 110c may have capabilities to be a Wi-Fi hotspot host and operate as AP 114c. As AP 114 is the data distribution point for network 112, it will be seen that the transmission area is centered on AP 114. As AP 114 moves (as it is a non-fixed device), its transmission area for network 112 will move with it. Other APs may be used as bridges for other networks. It will be seen that an AP is one form of a server device and that devices 110 are one form of client devices for a network. Other devices can be provided in the client/server relationship.

In system 100, local area network (LAN) 118 is connected to network 102 and provides local wired and wireless connections to its devices 104 and 104b. Internet 120 may be connected to network 102.

Now further detail is provided on server 106 in network 102. Server 106 is a processor-controlled device (not shown) that has database 106b containing files, data, applications and other materials that can be accessed by devices in system 100. In one configuration, server 106 is an app server, storing a library of different applications that can be downloaded and installed on devices 110 and AP 114. Applications can cover many different categories, such as entertainment applications (including games), news applications, calendar applications, word / number / presentation processing applications, music / video applications, social network data and others. Different versions of a given application (such as a word processing application) can be provided for different devices, to account for different operating systems, memory requirements, display sizes and other operating parameters of the devices that download the applications. Server 106 has application management software operating thereon. The management software receives application download requests from network 102 and evaluates the contents of the request. A series of accounts is typically also managed by server 106 (or a related system). As such when a request for an application is received, server 106 can examine its account records to see if there is an account relating to the request. Depending on the parameters associated with the account (e.g. status in good standing, limitations on types of applications, limitations number of downloads, limitations on size of downloads, etc.), server 106 may or may not permit the requesting device to be provided with the requested application. If the request is approved by server 106, then server 106 initiates a download of the application to the requesting device through network 102. Updates are then made to the account (e.g. charges for the download are applied to the account). Server 106 may broadcast messages to its clients to advise of available applications. Server 106 may track a history of all downloaded materials for every account, including successful downloads, unsuccessful downloads and details on the downloads. Application management software operating on server 106 may provide some or all of these functions. As noted earlier, several servers (not shown) providing separate accesses to separate files in addition to server 106 may be provided in system 100.

In addition to the networks 102 and 112, devices in system 100 can establish additional local networks with one or more devices. For example, NFC technologies allow two devices to communicate wirelessly to each other when they are placed in very close proximity to each other. NFC technologies are an extension of the ISO 14443 proximity-card standard as a contactless card, Radio Frequency Identification (RFID) standard that incorporates the interface of a smart card and a reader into one device. A NFC-enabled device, such as device 110, typically includes an NFC integrated circuit (IC) that communicates to such devices as existing ISO 14443 smart cards and readers and other NFC devices and compatible with any existing contactless infrastructure. The NFC ICs may magnetic field induction where two loop antennas are located near each other and form an air-core transformer. The NFC technology operates on an unlicensed radio frequency ISM band of about 13.56 MHz and has a bandwidth of about 2 MHz. The working distance for the two devices is usually about between 0 and 20 centimetres. In use, a user of a first NFC device brings it close to another NFC enabled device or tag to initiate NFC communication. NFC data rates range from about 106 to 424 kbit/s.

There are different modes of NFC operation. Most mobile wireless communications devices operate in an active communications mode using a modified Miller and 100% amplitude shift keyed (ASK) code unless a passive mode is used in which a Manchester and ASK code is used. Further details are set forth in the Mobile NFC Technical Guidelines, Version 2.0, November 2007 by GSMA.

The NFC Interface and Protocol (sometime referred to as "NFCIP-1" or "the NFC protocol") allows for communication between an "initiator" device and a "target" device, when the initiator and the target devices are brought close together. NFC communications may be implemented in a passive communication mode, where the initiator device provides an electromagnetic carrier field and the target device answers the initiator device by modulating the carrier field. In the passive communication mode, the target device may draw operating power from the carrier field provided by the initiator device. NFC communications may also be implemented in an active communication mode, where both the initiator device and the target device generate their own electromagnetic fields.

For the purposes of terminology and not limitation for this disclosure, when a first communication device transmits data to a second communication device, the communicating devices considered to be are operating in a "server / client" relationship, where the first device is the "server" device and the second and other receiving device(s) are the "clients". In NFC transmissions, the server device may be the initiator device and the client may be the target device. In some networks, the server may be a fixed device, such as a wireless router directly connected to a physical wired Ethernet port in a network. The server operates as a node for the network and channels communications from the client devices intended for other devices in the network through the server device, acting as a node. Other networks may have a non-fixed server, such as device 110 or AP 114. For the purposes of convenience, and not limitation, the term "fixed" is used herein to describe a device that typically is not mobile, typically has a physical connection to its network (e.g. through an Ethernet port) and typically is powered by a power connection to a utility network (through a power cord). The term "non-fixed" is used herein to describe a device that typically is mobile, typically makes a wireless connection to its network and other devices and typically is powered by a self-contained power source (e.g. through a battery). Any or all of such noted characteristics are not necessarily present for any fixed or non-fixed device. The phrase "server/clients" refers generally to devices that are related in some hierarchical network manner. Other phrases may be used to describe comparable device relationships for an embodiment, such as "transmitting / receiving devices", "initiating device / target devices", "master / slave", "network node / client", "access point / clients", etc.

Now further detail is provided on devices 110 in network 112. Unless otherwise stated, for the purposes of this disclosure any description relating to device 110 applies to AP 114. Device 110 is provided as an exemplary communication device of an embodiment that has processes, systems and modules to enable it to transmit data to other devices. Transmissions can be carried over network 112, network 108 and / or through NFC technologies.

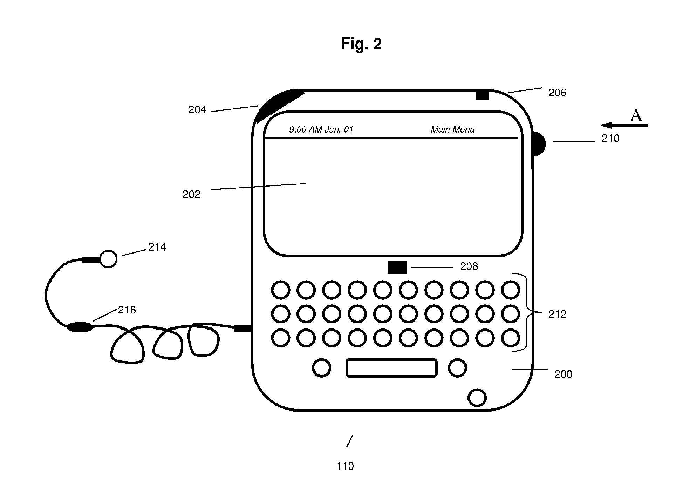

Fig. 2 provides general features of device 110 in accordance with an embodiment of the disclosure. In the present embodiment, device 110 is based on a computing platform having functionality of an enhanced personal digital assistant with cellphone and e-mail features. It is, however, understood that device 110 can be based on construction design and functionality of other electronic devices, such as smart telephones, desktop computers, pagers or laptops having telephony equipment. In a present embodiment, device 110 includes a housing 200, an LCD 202, speaker 204, an LED indicator 206, an input device 208 (which may be a trackpad, trackball, thumbwheel or other input device), an ESC ("escape") key 210, keypad 212, a telephone headset comprised of an ear bud 214 and a microphone 216. ESC key 210 can be inwardly depressed along the path of arrow "A" as a means to provide additional input to device 110. It will be understood that housing 200 can be made from any suitable material as will occur to those of skill in the art and may be suitably formed to house and hold all components of device 110.

Device 110 is operable to conduct wireless telephone calls, using any wireless phone system. Exemplary technologies for network 108 are any known wireless phone systems such as a Mobitex (trade-mark) network, a DataTAC (trade-mark) network, a General Packet Radio Service (GPRS) network and also a variety of voice communication networks, such as Advanced Mobile Phone Service (AMPS), Time Division Multiple Access (TDMA), Code Division Multiple Access (CDMA) system, wireless CDMA, CDMA 2000 system, Cellular Digital Packet Data (CDPD) system, Personal Communication Service (PCS), Global System for Mobile Communication (GSM), Wi-Fi networks, 3GPP Long Term Evolution (LTE) networks, etc. Other wireless phone systems that network 108 may support can include Wireless WAN (IMS), Wireless MAN (Wi-Max or IEEE 802.16), Wireless LAN (IEEE 802.11), Wireless PAN (IEEE 802.15 and Bluetooth), high-speed data packet access (HSDPA) networks, Evolved High Speed Packet Access (HSPA+) networks, etc. and any others that support voice. Additionally, a Bluetooth network may be supported. Other embodiments include Voice over IP (VoIP) type streaming data communications that can simulate circuit-switched phone calls. Device 110 may have capabilities of communicating with other devices using other communication technologies, including instant messaging (IM) systems, text messaging (TM) systems and short message service (SMS) systems. Ear bud 214 can be used to listen to phone calls and other sound messages and microphone 216 can be used to speak into and input sound messages to device 110.

Device 110 is a processor-controlled device (not shown). Software applications operating on device 110 control its operations and network connections to implement the above-noted three features. Further detail on selected applications for an embodiment is provided later.

Device 110 may operate as a dual-mode modem. Its mobile data communication functions allow it to make WAN connections and allow it to deliver voice and e-mails to user of device 110. Its Wi-Fi connections (acting as a server) enable delivery of data to other devices 110 (e.g. a remote wireless device) simultaneously. Since wireless device 110 / AP 114 is portable, it may move. As such, for AP 114 wireless coverage for network 112 and devices 110 are dynamic, each independently potentially ranging from non-existent, to poor, to adequate, to good and to excellent (with values in-between).

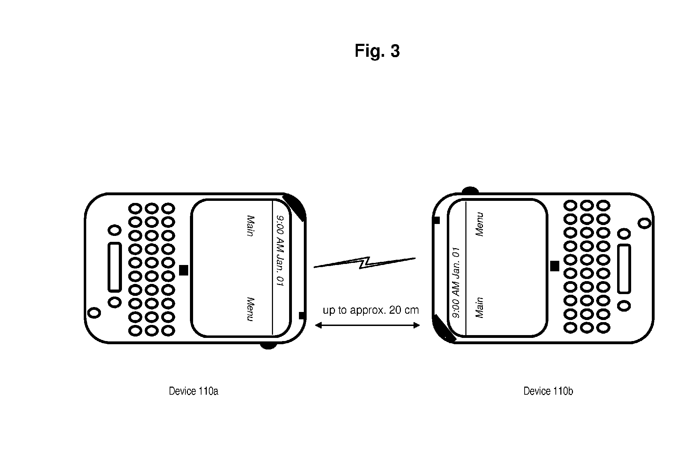

Device 110 has modules to provide NFC communications. Fig. 3 shows device 110a communicating with device 110b in a NFC technology (not to scale). It is seen that the two devices do not have to be in physical contact with each other, but they do need to be within a defined proximity range to each other per the NFC standards. Some handshaking between devices 110a and 110b may be performed by the devices according to NFC protocols to verify that the devices can communicate with each other. Once a NFC channel is established between devices 110a and 110b, the two devices can exchange messages, data, applications, signals and other materials over the NFC channel.

As noted before, server 106 (Fig. 1) can provide apps to devices in system 100, such as device 110. Device 110 can access an interface generated by the application management software operated by server 106 to selectively identify and download applications into its local storage. In one embodiment, the interface is provided through a website that device 110 can access, which allows a user of device 110 to sign on to an account through device 110 (providing a user name and password) and then select and download on or more applications from server 106 to device 110 for installation on device 110. Device 110 can maintain in its local memory a list of applications, data and files that have been downloaded (or attempted to be downloaded) from server 106 and other servers and devices (e.g. applications stored on USB drives). The list may provide for each application downloaded from server 106 a content identification (ID) tag, which provides a unique ID code for the application. The content ID tag may contain data identifying specific characteristics, restrictions and / or permissions associated with the downloaded application, such as an address of its source server, its release version, its release date, the price (if any),any license requirements, any system requirements, any restrictions on use (e.g. can only be downloaded by devices associated with certain data carriers, cannot be downloaded by devices associated with other data carriers, geographic restrictions, etc.). These restrictions / permissions can be managed and tracked by server 106.

With general features of network 112, server 106 and device 110 described, further detail is provided on data transmissions between a first communication device 110 (as an initiating device) and a second communication device 110 (as a target device). First, details are provided on processes and GUIs relating to the initiating device, and then details are provided on processes and GUI relating to the target device.

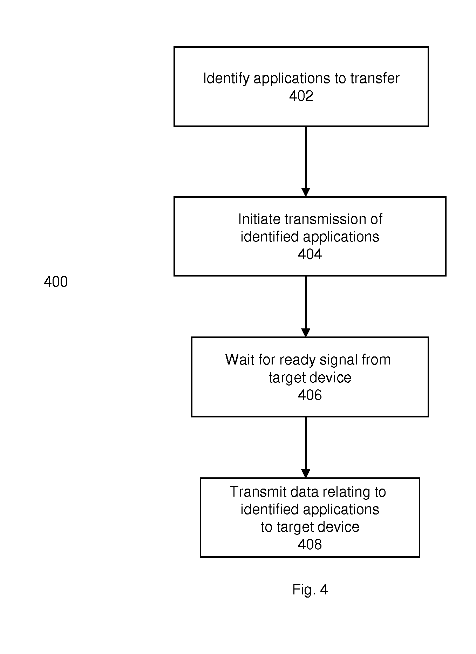

For the initiating device, referring to Figs. 3 and 4, process 400 shows an exemplary data transmission process operating on device 110, when first communication device 110a is being used to transmit data to second communication device 110b, as a target device. The data may be an application, metadata relating to an application, a file (such as a music file, a photograph, and a video file), a configuration file and / or any other electronically stored data accessible by device 110. The disclosure herein describes identifying and transmitting application data and application metadata between devices; however it will be appreciated that other embodiments include identification and transmission of other data, files and other materials not necessarily related to applications may be exchanged between devices.

To begin, process 402 identifies which applications that are currently residing on or access by first communication device 110a that are to be transmitted. In other embodiments, apps that reside elsewhere may be identified (e.g. at servers in the network). Identification of apps can be done automatically by modules operating on first communication device 110a using selection criteria provided to a search engine when a list of applications is shown on first communication device 110a. Such criteria may be based on type, time or other parameter associated with the applications, first communication device 110a, the user of the first communication device, an account associated with the first device and / or other criteria. For example, the selected (or not selected) applications may include all applications stored locally in a certain storage folder in first communication device 110a, all "game" applications, all "productivity" applications, all "free" applications, all applications returned from a search query, all applications costing less than $1.00, all applications costing more than $5.00, all applications from an identified supplier, etc. For one embodiment, the default setting is to select all successfully downloaded applications stored on first communication device 110a. If an application had been successfully downloaded and installed on first communication device 110a, but then was deleted, that deleted application may or may not be included in the list. The identification may also be done manually, via a manual selection of applications through a GUI on the display of first communication device 110a by a user of first communication device 110a. The identification may also be via an identification of devices that are within a certain proximity to first communication device 110a. In other embodiments, other selection criteria may be applied to identify the apps to be offered for download by device 110. Some of these other criteria are described later.

At process 404, transmission of data that identifies the selected applications is initiated by first communication device 110a. The transmission is carried over a communication channel, which may involve a technology determined by first communication device 110a. One embodiment uses NFC technologies as the communication channel. However, Wi-Fi, Ethernet, Internet and other network technologies may be used. For this example, NFC technologies are used by devices 110.

In another embodiment, a streamlined transmission command is provided, where in a GUI on first communication device 110a, a "share" radio button is provided (not shown). Activation of the button causes first communication device 110a to either select all applications or automatically select all applications that meet predefined criteria for transmission to second communication device 110b. With this streamlined the user at first communication device 110a need only activate the "share" button to start the transmission process. This eliminates or reduces a need of the user to identify what applications are to be provided in the transmission.

In another embodiment, a transmission command may be provided using a bumping protocol, where two communicating devices are "bumped" together, which is recognized by the devices as a command to initiate a transfer. The bumping may be expected when first communication device 110a is generating a list of applications on its display.

Before any transmission is initiated, at process 406, first communication device 110a waits for a ready signal from the target device. In a NFC technology handshake communications are exchanged between the initiating device (here first communication device 110, such as device 110a) and the target device (here second communication device 110, such as device 110b).

If the handshake is not completed for an NFC transmission, then process 400 can attempt to contact second communication device 110b again to send its ready signal. Alternatively, process 400 can end. However, once handshake is successfully completed, transmission(s) can begin from first communication device 110a, per process 408. Initial header data for the transmission can be provided from first communication device 110 to second communication device 110b indicating the expected length and contents of the entire transmission and a code check. The code check provides a checksum mechanism for second communication device 110b as it receives data from first communication device 110a. The code check can be cyclic redundancy check (CRC) data generated for the transmission. The transmissions can be in data packets. In one embodiment, for the selected applications, the transmissions are of the content ID stored on first communication device 110a and not the applications themselves. This facilitates in providing compact data transmissions between the devices. However, in other embodiments, the applications themselves may be transmitted. When several content IDs are to be transmitted, they can be done sequentially. If there is a break in the communication link before all of the selected data is transmitted, then the transmission may be re-started or a failure signal may be provided to first communication device 110a and second communication device 110b. In one embodiment, the content ID for first communication device 110a is stored on first communication device 110a. As such, the content ID is transmitted over a communication channel from first communication device 110a and is received by second communication device 110b. In another embodiment, the content ID for first communication device 110a is stored elsewhere, for example with server 106. As such, the content ID is transmitted over a different communication channel, such as a channel from server 106 to second communication device 110b. For this embodiment, coordination would need to be conducted between server 106 and second communication device 110b to establish that different communication channel and to coordinate the transmission and reception of the content ID.

If the NFC communication link fails for some reason, then an embodiment may attempt to retransmit the selected applications and / or the related content ID through the NFC channel or through a different network to second communication device 110b, such as through the Internet or through a Wi-Fi connection. Alternatively, the transmissions may be provided at a first instance through a different network.

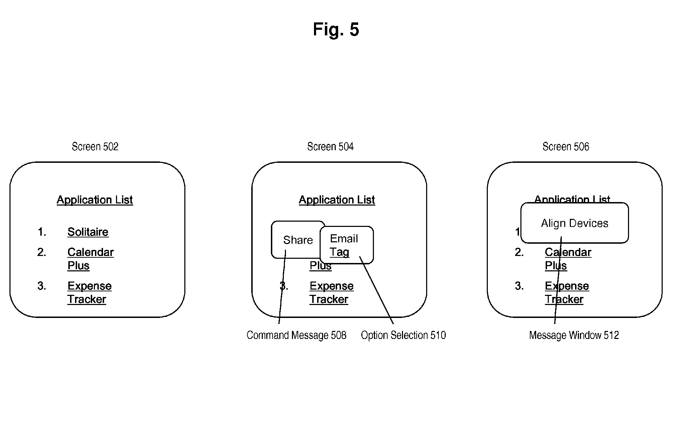

Having regards to process 400 of Fig. 4, Fig. 5 shows three exemplary screens 502, 504 and 506 of GUIs generated on the display of first communication device 110a as applications for transmittal are selected and a transmission to second communication device 110b is initiated.

Screen 502 shows a (partial) list of applications installed on first communication device 110a. The applications may have been installed through server 106 or may have been installed with the original configuration of first communication device 110a. When an application transmission from the first communication device 110a is to be initiated a transmit option may be activated. As a default for one embodiment, the user is not provided with any selection options for transmissions, so data relating to all application is sent, by default. Alternatively, selection criteria may have been preset, so no selection option is provided. Where a selection criteria is provided, a GUI allowing selection of applications is provided. This screen can be generated during processes 402 and 404 (Fig. 4).

Screen 504 shows that a GUI "share" message 508 was generated, indicating that a transmit command has been initiated. Thereafter option selection 510 provides two transmission options, either via email or via Tag (i.e. an NFC transmission). For the example, the user has selected the "Tag" option which is shown in underline. This screen can be generated as part of process 402 / 404 as well (Fig. 4).

Screen 506 shows that a GUI "align" message 512 was generated, indicating that the user should align first communication device 110a to be in sufficient proximity to second communication device 110b per NFC protocols, to allow the transmission to begin. Once the devices are properly aligned, the transmission of the selected metadata may begin automatically.

Once the transmission is complete or an error has occurred, a further message may be displayed on first communication device 110a (not shown). At this time, first communication device 110 has completed its functions for the transmissions and process 400 ends. It can then provide additional transmissions to the same or other devices 110 by re-executing process 400.

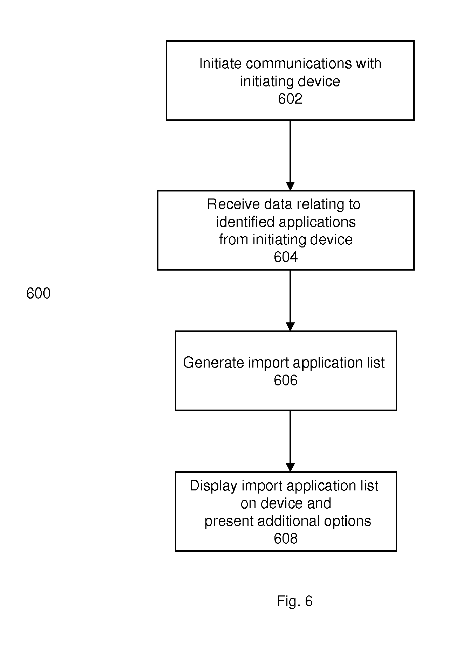

Now, for the target device, referring to Fig. 6, process 600 shows an exemplary data receiving process operating on device 110b, when second communication device 110b is receiving data from first communication device 110a. For the purposes of short form, second communication device 110b may be referred to as a device receiving a transmission and first communication device 110a may be referred to as a device transmitting the transmission.

To begin, in second communication device 110b, process 602 initiates communications with the first communication device 110a (corresponding to process 406 in Fig. 4). Again, in the NFC technology, handshake communications are exchanged between the initiating device (here, first communication device 110a) and the target device (here, second communication device 110b). This handshake may be used as a trigger condition to initiate a download of apps from device 110. Other trigger conditions may be provided (either at the first device 110a, second device 110b or another device, such as server 106).

If the handshake is not completed for a NFC transmission, then process 600 can attempt to contact first communication device 110a again. Alternatively, process 600 can end. However, once the handshake between second communication device 110b and first communication device 110a is successfully completed, receipt of transmission(s) from first communication device 110a can begin, per process 604. If there is a break in the communication link before all of the selected data is transmitted, then the transmission may be re-started or a failure signal may be provided to first communication device 110a. In some embodiments, the communication may be initiated through an application designed to retrieve or download applications to a mobile communications device.

Once the data transmission from first communication device 110 is complete, second communication device 110b may conduct a checksum or other an integrity analysis of contents of the initial header transmission against and full transmission to determine whether there are errors in the transmission. If an error is detected, second communication device 110 may send an error message to first communication device 110b and a retransmission of the data may be initiated. If a retransmission is not possible (e.g. first device has fully disconnected from second communication device) an error message may be generated on second communication device 110b.

Once the transmission from first communication device 110a is verified and complete, communications between first and second communication devices 110 are complete. At this time, second communication device 110b may not need to communicate further with first communication device 110a.

With the completion of receipt of the transmission of the content ID from first communication device 110a, second communication device 110b has a snapshot of applications stored on first communication device 110a. Some or all of these applications may be applications which are remotely available, for example, on a remote server 106. Some or all of these applications may be available to be downloaded to the second communication device 110b, for example, over a network 102 through an application on second communication device 110b designed to download remote applications to a mobile communication device. As such, these "remote" applications may be quickly identified and more easily imported by second communication device 110. Again, the snapshot may be in metadata of the content ID data provided for the applications installed on first communication device 110a.

In one embodiment, second communication device 110b uses the snapshot information to generate an import application list per process 606. The import application list can include details of any or all of the snapshot information received from first communication device 110a. Second communication device 110b (or server 106) may evaluate each snapshot to determine if the related application has already been installed on second communication device 110b and / or if the related application is permitted to be installed on second communication device 110b and / or if the related application has a restriction preventing it from being installed on second communication device 110b. If there is a compatibility issue with the related application, then the import list may not include the related application in the list. As such, the import application list in one embodiment includes applications from the list of applications that are not currently installed on the first communication device and that are permitted to be installed on first communication device.

Once the import application list is complete, in process 608 the import application list is generated on a display of second communication device 110b in a GUI and the GUI may generate options allowing selection one or more of the applications in the list to be downloaded to the second communication device. As such, a "favourites" list of applications has been provided from first communication device 110a to second communication device 110b and the user at second communication device 110b may advance through the options and select from the GUI which application(s) he wants to install on second communication device 110b.

In another embodiment, based on predetermined installation criteria, one or more of the applications in the import list may be automatically installed on second communication device 110b, as may be determined by installation criteria. The installation criteria may be based on type, time, size, presence (or absence) of another file or app, operating system version, memory requirement, other parameter associated with the applications, second communication device 110b, the user of the second device, an account associated with second device, the communication link for the second device with server 106 and / or other criteria. For example, the installed (or rejected selected) application may: exclude all "game" applications, exclude applications costing more than $5.00 (or some other limit), exclude applications for a certain operating system version, exclude applications older than a certain date, exclude applications larger than a certain size, exclude applications having a content rating that is restricted (e.g. "adult" / "mature" / "violent" content), include some or all "productivity" applications, include some or all application costing less than $1.00, include some or all applications from an identified supplier, require that a minimum transmission bandwidth be available, require that the download be conducted at restricted times or days, etc.

For one embodiment, the installation default setting is to not automatically download any application in the import list. As such, through a GUI, the user at second communication device 110b individually selects an application from the import list and confirms that the application is to be downloaded from server 106. At that time, server 106 may itself check the parameters of the requested application against any restrictions relating to second communication device 110b. Server 106 may evaluate whether the requested application has already been installed on second communication device and / or if the requested application is permitted to be installed on second communication device 110b. If there is a compatibility issue with the requested application, then the download for the requested application may be denied. If there is a restriction associated with the requested application, then the download for the requested application may be denied. A restriction may be imposed by the carrier associated with first communication device 110a and / or server 106. Also, there may be legal restrictions, such as import / export / copyright restrictions for the transmission. Such restrictions may be based on the location of first communication device 110a or identification information associated with the user of first communication device 110a (e.g. his age, his credit rating, his account status, etc.).

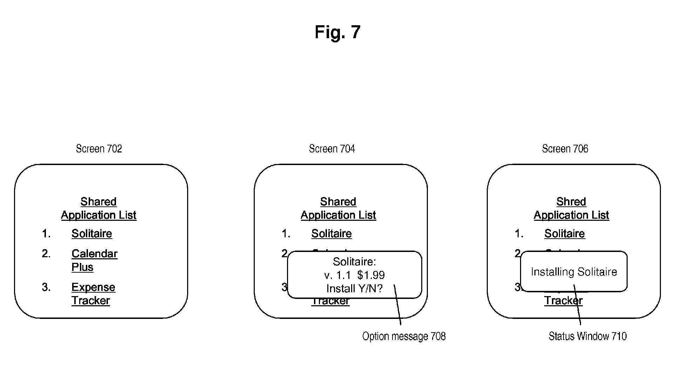

Having regards to process 600, Fig. 7 shows three exemplary screens 702, 704 and 706 of GUIs generated on the display of second communication device 110b after second communication device 110b receives a complete transmission from first communication device 110a.

Screen 702 shows a (partial) import list of applications that have been installed on first communication device 110. This screen can be generated during process 606 (Fig. 6).

Screen 704 shows that a GUI "option" message 708 was generated when the user at second communication device 110b selected to download "1. Solitaire" as shown in screen 702. Message 708 provides some data relating to the selection (e.g. its release date, its version, any price, any size, etc.) and provides a request to download or not download the application. If the user provides a "yes" response to the GUI (e.g. through an "accept" command activated on second communication device 110), then process 600 initiates a download request for the identified application to server 106. The request can be carried over any network that connects second communication device 110b to server 106 in network 102. The download is not typically carried over the NFC link, but it may be so provided.

Screen 706 shows that a GUI "Installing Solitaire" message 710 was generated on the display of second communication device 110b, indicating that server 106 has evaluated the request for the application for second communication device 110 and has not identified any restrictions to providing the application to second communication device 110b and so server 106 has initiated a download of the application to second communication device 110b. Again, the data transmission is carried over the network that connects second communication device 110b to server 106 in network 102. Once the installation is complete (or not) a further message may be generated (not shown).

Server 106 tracks the download of the selected application by second communication device 110b and server 106 may also record the referral of the application from first communication device 110a to second communication device 110b. Such referrals can be tracked for loyal and reward programs for a user of first communication device 110a operated by an administrator of server 106.

For process 600, an embodiment has considered providing applications and application data from one server 106 that provided applications to first communication device 110a. In other embodiments, multiple servers may provide multiple sources of different or duplicated applications and files to devices 110. As such, second communication device 110b may be able to select from more than one server in system 100 application(s) installed on first communication device 110a. As such, content ID may include an address indicating the source server for the application. Further for process 600 it is possible to combine multiple update lists from different devices 110 into a single aggregate list generated on second device 110. The aggregate list would provide a streamlined list of all entries for applications provided (which may be from multiple devices 110). Duplicate entries in the aggregate list may be redacted or retained if the entries are provided from different servers. Having such duplicate entries provides a backup source for an application if needed.

Now, details are provided on additional features of other embodiments. These additional features relate to presentation of apps on a target device, sourcing of apps for downloads for a target device and accounting and costing of downloads. It will be appreciated that these additional features may be individually and / or collectively incorporated into features of other embodiments as described herein. Each additional feature is discussed in turn.

A first feature of another embodiment applies a filter to the list of apps and provides the resulting filtered set of apps to the second device 110b for downloading (as per the general download process 402 per Fig. 4). In particular, a list of available apps for second device 110b that is generated on device 110b shows apps may be filtered to represent an intersection of overlapping parameters for apps currently installed in second device 110b and apps available from first device 110a (or from other sources). As such, the intersecting set shows only apps that are both not installed on second device 110b and that are available from first device 110a (or from other sources). As such, second device 110b is provided with a useful set of "new" apps that are available and can be installed on second device 110b.

A second feature of another embodiment provides a filter to the list of apps that filters the list applying one or more filter parameters, such as by global popularity (e.g. most downloaded apps in the network), by local popularity (e.g. most downloaded apps by a family member) or other parameters.

A third feature of another embodiment provides lists of apps for device 110b based on a minimum threshold of recommendations provided by device 110a, other devices in the network or data from other sources, such as popularity sites, social network sites (e.g. Facebook - trademark, Pinterest - trademark and others) and other sources.

A fourth feature of another embodiment provides payment and tracking mechanisms for accounts associated with either first device 110a and / or second device 110b. When first device 110a provides a download to second device 110b, a payment form (e.g. dollar value, affinity points etc.) may be charged against an account associated with second device 110b and / or a credit form (e.g. dollar value, affinity points etc.) may be applied to an account associated with first device 110a. This payment to the account of the first device 110a may be considered to be an affiliate fee. Apps provided to device 110b may be classified into categories (free, minimum charge, full charge) and a GUI generated on second device 110b show the apps grouped by such categories. A user at device 110b may identify apps based on a cost (e.g. free, $1, full rate) and then may select an app for downloading from a particular category he chooses. The payment may be provided by a vendor or a distributor associated with the app. Further local discounts for an app may be provided. For example, a discount maybe provided to the user at second device 110b when an app is provided from first device 110a (instead of another device). In such a situation, an account associated with first device 110a may be provided with a credit or affiliate fee when the app is downloaded by second device 110b. In another embodiment the affiliate fee may be provided by the vendor (or its distributor) to the account of first device 110a whether or not a discount is provided to the account of second device 110b.

A fifth feature of another embodiment provides different trigger conditions for initiating downloads to device 110b, aside from NFC signals as noted earlier. For example, download trigger signals may be embedded into other applications that are operating on device 110b. For example, in a game application operating on second device 110b, when the player of the application at device 110b reaches a predetermined stage in the script of the game of the application, that may be a trigger to request a downloaded of additional content that may relate to the game or may relate to a context associated with the game. As another example, when an account associated with device 110b has credits that exceed a predetermined threshold level (e.g. an affinity account), then a download may be initiated. The available content may be selected, displayed and / or downloaded per features described herein.

A sixth feature of another embodiment provides allocation / sharing of rights and / or licenses associated with downloads. A license for an app presently located in first device 110a (or elsewhere) may need to be transferred, assigned or sublicensed (as need be as determined by rights in the license for the app provided by the provider of the app) to second device 110b when device 110b downloads the app from device 110a. The feature tracks the license parameters of the app (e.g. limits on where, to whom and how many downloads may be provided from device 110a) and checks current status of the parameters for the license when second device 110b makes a request for the app. If the license parameters for the download request are approved, then the download of the app from device 110a to device 110b is permitted to proceed and once the download is completed, then parameters of the license for the app for device 110a and 110b and the provider of the app are updated as needed.

A seventh feature of another embodiment provides trigger conditions to control downloads of apps for device 110b based on a location and / or an operating state of one or both of first device 110a and 110b. For example, upon detection of either device 110a or 110b as being in a predetermined location may trigger device 110a to offer downloads to device 110b. Additionally or alternatively, detection of device 110b as being in (or away from) a predetermined location may trigger device 110b to seek downloads from device 110a. Additionally or alternatively, detection of device 110a and / or device 110b as having a Wi-Fi communication link may trigger device 110b to seek downloads from device 110a. Such a link provides a low-cost transmission of data between device 110a and 110b. Once a trigger is activated, a list of potential app can be identified and may be sent to device 110b.

An eighth feature of another embodiment provides downloads of apps from one or more sources that can collectively provide the app, e.g. in a peer-to-peer file sharing protocol for a network (e.g. in a Bit Torrent network).

A ninth feature of another embodiment provides downloads of apps from one or more alternative sources other than (or including) device 110a. Device 110a (or the network) may track one or more alternative sources for an app offered by device 110a to device 110b. When device 110b makes a selection for an app to device 110a, device 110a may provide instructions to an alternative device in the network to download the app to device 110b. This alternative download may be arranged because the relative cost, download speed, security in the communication link between the alternative source and device 110b is better than a download provided by device 110a in a communication link to device 110b. The download may be initiated by device 110a or 110b.

A tenth feature of another embodiment provides downloads of apps from device 110a when device 110b is notified of the app from another device (e.g. the app server) in the network. The app server may track one or more alternative sources for an app (e.g. device 110a). When device 110b makes a selection for an app to the server, the server may provide instructions to device 110a to download the app to device 110b. This alternative download may be arranged because the relative cost, download speed, security in the communication link between device 110a and device 110b is better than a download provided by the server in a communication link to device 110b. The download may be initiated by the server or device 110b.

It will be appreciated that embodiments may incorporate one or more of the above noted features in various combinations.

With aspects of main features of an embodiment described, further detail is now provided on internal components in device 110 (which includes first communication device 110 as the initiating device and second communication device 110 as the target device).

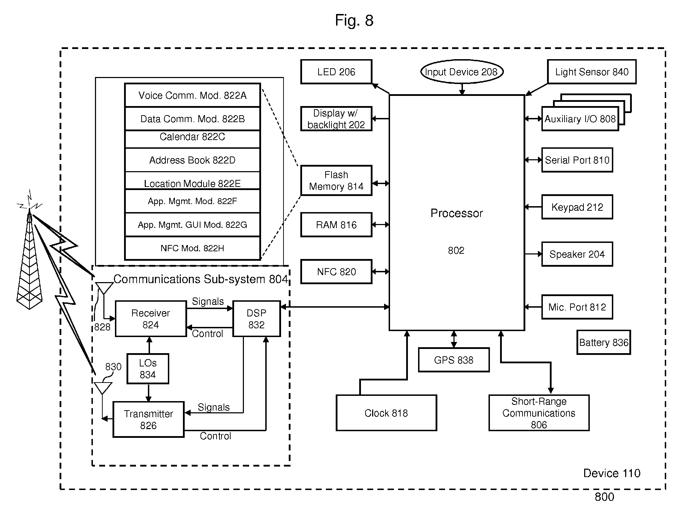

Referring to Fig. 8, functional components of device 110 (either as transmitter of data, receiver of data or both) are provided in schematic 800. The functional components are generally electronic, structural or electro-mechanical devices. In particular, processor 802 is provided to control and receive almost all data, transmissions, inputs and outputs related to device 110. Processor 802 is shown schematically as coupled to keypad 212 and other internal devices. Processor 802 preferably controls the overall operation of device 110 and its components. Exemplary microprocessors for processor 802 include microprocessors in the Data 950 (trade-mark) series, the 6200 series and the PXA900 series, all available at one time from Intel Corporation. Processor 802 is connected to other elements in device 110 through a series of electrical connections to its various input and output pins. Processor 802 has an IRQ input line which allows it to receive signals from various devices and modules. Appropriate interrupt firmware is provided which receives and reacts to the signals detected on the IRQ line. An interrupt signal may be used to indicate a request to terminate the segmented scanning mode of an embodiment.

In addition to processor 802, other internal devices of device 110 are shown schematically in Fig. 8. These include: display 202; speaker 204; keypad 212; communication sub-system 804; short-range communication sub-system 806; auxiliary I/O devices 808; serial port 810; microphone port 812 for microphone 216; flash memory 814 (which provides persistent storage of data); random access memory (RAM) 816; clock 818; NFC module 820; and other device sub-systems (not shown). Device 110 is preferably a two-way radio frequency (RF) communication device having voice and data communication capabilities. In addition, device 110 preferably has the capability to communicate with other computer systems via the Internet.

Operating system software executed by processor 802 is preferably stored in a computer-readable medium, such as flash memory 814, but may be stored in other types of memory devices, such as read-only memory (ROM) or similar storage element. Downloaded data, including applications provided from server 106 and initial header information provided from other devices (as described herein) may be stored in flash memory 814 or elsewhere in device 110. In addition, system software, specific device applications, or parts thereof, may be temporarily loaded into a volatile store, such as RAM 816. Communication signals received by the mobile device may also be stored to RAM 816.

In addition to an operating system operating on device 110, additional software modules 822 enable execution of software applications on device 110. A set of software (or firmware) applications, generally identified as applications 822, that control basic device operations, such as voice communication module 822A and data communication module 822B, may be installed on device 110 during manufacture or downloaded thereafter. As well, other software modules are provided, such as calendar module 822C, address book 822D and location module 822E.

Messages and data received and / or generated by any module 822 may be processed by data communications module 822B. Messages and data may be transmitted / received in network layer communications, emails, and / or other messaging systems to NFC systems, network 112 and / or devices 110. Module 822B receives messages from external devices 110, extracts relevant information from them and provides the information to relevant modules. Module 822B notifications from modules 822, extracts relevant information from them and generates and sends messages containing relevant information to the messages to network 112, including to devices 110. Messages relating to network 112 for device 110, when operating as an AP are processed separately by the modules from other non-network 112 communications (e.g. cellular communications) processed by device 110.

Application management module (AMM) 822F is software and / or firmware analyzes and manages applications that have been loaded to device 110 from an external source (e.g. server 106, Fig. 1). It manages a list of loaded application and their related content IDs. It provides some of the processes described in process 400 (Fig. 4) and in process 600 (Fig. 6). In one embodiment, AMM 822F also federates distribution of applications. It may ensure that applications are only distributed to permitted devices / accounts and those applications cannot be shared without payment for the application.

Application management GUI module (AMGM) 822G is software and / or firmware that provides GUIs in generating display screens on display 202 of device 110, such as screens shown in Figs. 5 and 7. GUIs that receive data and access parameter settings from input screens is processed by AMGM 822G and is provided to other modules, such as EAMM 822F.

NFC module 822H is software and / or firmware that allows processor 802 to control NFC communications and NFC module 820 (described below).

Additional modules such as personal information manager (PIM) application may be provided. Any module may be installed during manufacture or downloaded thereafter into device 110.

Data associated with each application, the status of one or more networks, profiles for networks and trigger conditions for commands for networks can be stored and updated in flash memory 814.

Communication functions, including data and voice communications, are performed through the communication sub-system 804 and the short-range communication sub-system 506. Collectively, sub-systems 804 and 806 provide the signal-level interface for all communication technologies processed by device 110. Various applications 822 provide the operational controls to further process and log the communications. Communication sub-system 804 includes receiver 824, transmitter 826 and one or more antennas, illustrated as receive antenna 828 and transmit antenna 830. In addition, communication sub-system 804 also includes processing modules, such as digital signal processor (DSP) 832 and local oscillators (LOs) 834. The specific design and implementation of communication sub-system 804 is dependent upon the communication network in which device 110 is intended to operate. For example, communication sub-system 804 of device 110 may on network technologies described earlier (e.g. GPRS, 802.11 networks, Bluetooth networks, AMPS, TDMA, CDMA, CDMA 2000, PCS, GSM, WWAN, WMAN, WLAN, WPAN (Bluetooth), IM, TM, SMS, etc.).

Short-range communication sub-system 806 enables communication between device 110 and other proximate systems or devices, which need not necessarily be similar devices. For example, the short-range communication sub-system may include an infrared device and associated circuits and components, a Wi-Fi or a Bluetooth (trade-mark) communication module to provide for communication with similarly enabled systems and devices and NFC communications. Sub-system 806 may have one or more inputs or outputs to sub-system 804 in processing signals for its networks.

NFC module 820 controls the transmission and receipt of NFC signals. In one embodiment, module 820 includes an NFC circuit and antenna (not shown) that is tuned typically for 13.56 MHz. The NFC circuit may be, for example, a PN531 microcontroller-based transmission module from the Phillips Semiconductor Branch of Koninklijke Phillips Electronics N.V. When the NFC circuit is a PN531 module, the NFC circuit may include analog circuitry and a contact list Universal Asynchronous Receiver Transmitter (UART), a core and a set of host interfaces. The analog circuitry may include an output driver, an integrated demodulator, a bit decoder, a mode detector and an RF-level detector. The contact list UART may include elements for data processing, Cyclical Redundancy Checking (CFC), parity generation, framing generation and check bit coding and decoding. The core typically includes an 80C51 microcontroller, 32 Kbyte of ROM and one Kbyte of RAM. A set of host interfaces can interface with the microprocessor and interface according to such known standards as 12C, serial UART, SPI and USB. Features of module 820 may be incorporated into sub-system 806.

A magnetic sensor and magnet (not shown) may be provided, which may be used as part of NFC communications. The magnet may operate with processor 802 to allow a different communications pathway using electromagnetic energy that is changed to correspond to changing data. The magnet may work as an active or passive device in association with other components of device 110 to establish and maintain communication connections (e.g. a Bluetooth connection or a Wi-Fi connection) without activating and using NFC module 820.

In addition to processing communication signals, DSP 832 provides control of receiver 824 and transmitter 826. For example, gains applied to communication signals in receiver 824 and transmitter 826 may be adaptively controlled through automatic gain-control algorithms implemented in DSP 832. One particular operational aspect of receiver 824 and antenna 828 is that they need to be tuned to receive signals in the 802.11 network bands, e.g. signals in the 2.4 GHz to 5.8 GHz range for sub-systems 806 and if needed, sub-system 804. Additional filters on antenna may also be used to provide such functionality.

Receiver 824 and antenna 828 provide at least some of the hardware and software elements needed to detect when device 110 is in the presence of communication signals from networks 108 and 112, thereby enabling device 110 to communication with other devices in networks 108 and 112.

Powering the entire electronics of the mobile handheld communication device is power source 836. In one embodiment, power source 836 includes one or more batteries. In another embodiment, power source 836 is a single battery pack, especially a rechargeable battery pack. A power switch (not shown) provides an "on/off" switch for device 110. A power source interface (not shown) may be provided in hardware, firmware, software or a combination of such elements to selectively control access of components in device 110 to power source 836. Upon activation of the power switch an application 822 is initiated to turn on device 110. Upon deactivation of the power switch, an application 822 is initiated to turn off device 110. Power to device 110 may also be controlled by other devices and by software applications 822.

Device 110 may also have global positioning system (GPS) 838 to assist in identifying a present location of device 110 and may also have light sensor 840 to provide data on the ambient light conditions for device 110.

Although an embodiment has been described in terms of identifying/maintaining server/client device hierarchies in a wireless network, such as a NFC network, the features of an embodiment can be provided in coordinate aspects of different connections among different devices in different networks.

It will be appreciated that AMM 822F, AMGM 822G and other modules in the embodiments can be implemented using known programming techniques, languages, processes and algorithms. Although the modules, processes and applications described are implemented in device 110, it will be appreciated that some functions of the modules may be provided in a separate server that is in communication with device 110. The titles of the modules are provided as a convenience to provide labels and assign functions to certain modules. It is not required that each module perform only its functions as described above. As such, specific functionalities for each application may be moved between applications or separated into different applications. Modules may be contained within other modules. A communication device for an embodiment may provide features relating to transmitting application data, receiving application data or both. Different signalling techniques may be used to communicate information between applications using known programming techniques. Known data storage, access and update algorithms allow data to be shared between applications. It will further be appreciated that other applications and systems on device 110 may be executing concurrently with other modules. As such, any of modules 822 (or parts thereof) may be structured to operate in as a "background" application on device 110, using programming techniques known in the art.

It will be appreciated that the embodiments relating to client devices, server devices and systems may be implemented in a combination of electronic modules, hardware, firmware and software. The firmware and software may be implemented as a series of processes, applications and / or modules that provide the functionalities described herein. The modules, applications, algorithms and processes described herein may be executed in different order(s). Interrupt routines may be used. Data may be stored in volatile and non-volatile devices described herein and may be updated by the modules, applications, hardware, firmware and / or software.

As used herein, the wording "and / or" is intended to represent an inclusive-or. That is, "X and / or Y" is intended to mean X or Y or both.

In this disclosure, where a threshold or measured value is provided as an approximate value (for example, when the threshold is qualified with the word "about"), a range of values will be understood to be valid for that value. For example, for a threshold stated as an approximate value, a range of about 25% larger and 25% smaller than the stated value may be used. Thresholds, values, measurements and dimensions of features are illustrative of embodiments and are not limiting unless noted. Further, as an example, a "sufficient" match with a given threshold may be a value that is within the provided threshold, having regard to the approximate value applicable to the threshold and the understood range of values (over and under) that may be applied for that threshold.

The present disclosure is defined by the claims appended hereto, with the foregoing description being merely illustrative of embodiments of the disclosure. Those of ordinary skill may envisage certain modifications to the foregoing embodiments which, although not explicitly discussed herein, do not depart from the scope of the disclosure, as defined by the appended claims.

## Claims

1. A method for use by a first communication device (110a) of transmitting data relating to the first communication device (110a) to a second communication device (110b), the method comprising:
upon detection of a trigger condition,
identifying a list of applications available for download (402) from the first communication from the applications installed on the first communication device (110a) or on a server (106) based on a filter of applications installed on the first communication device (110a) or on a server (106); and
transmitting the list of applications and initial header data indicating an expected length and contents of the applications in the list and a code check;
and
upon activation of a transmit command at the first communication device
identifying an application in the list for transmission to the second communication device (110b); and
transmitting the application (408) to the second communication device (110b).

2. The method of transmitting data relating to a first communication device (110a) to a second communication device (110b) as claimed in claim 1, wherein:
the filter includes in the list applications stored on the first communication device (110a) that have a threshold of recommendations from a social network site, or
the filter includes in the list applications stored on the first communication device (110a) that were obtained from the server (106) or applications stored on the first communication device (110a) that meet a preselected criteria, or
the filter includes in the list a selection of all applications stored on the first communication device (110a) that were obtained from the server (106) and
applications stored on the first communication device (110a) that meet a preselected criteria.

3. The method of transmitting data relating to a first communication device (110a) to a second communication device (110b) as claimed in claim 1 or 2, further comprising:
upon activation of the transmit command at the first communication device (110a)
charging a first account associated with the second communication device (110b) with a payment for the application.

4. The method of transmitting data relating to a first communication device (110a) to a second communication device (110b) as claimed in claim 3, further comprising:
upon activation of the transmit command at the first communication device (110a)
applying to a second account associated with the first communication device (110a) a credit for transmitting the application.

5. The method of transmitting data relating to a first communication device (110a) to a second communication device (110b) as claimed in any preceding claim, further comprising:
upon activation of the transmit command at the first communication device (110a)
applying to license associated with the application to the second communication device (110b).

6. The method of transmitting data relating to a first communication device (110a) to a second communication device (110b) as claimed in any preceding claim, wherein:
the trigger condition is having a second application operating on the second communication device (110b) reach a predetermined stage or having an account associated with the second communication device (110b) reach a predetermined level, or
the trigger condition is detection of the first communication device (110a) or the second communication device (110b) in a predetermined location or detection of a Wi-Fi communication link available to the first device or the second communication device (110b).

7. The method of transmitting data relating to a first communication device (110a) to a second communication device (110b) as claimed in any preceding claim, wherein:
part of the application is provided to the second communication device (110b) through a peer-to-peer network.

8. The method of transmitting data relating to a first communication device (110a) to a second communication device (110b) as claimed in claim 1, wherein:
the application is provided to the second communication device (110b) from the server.

9. The method of transmitting data from a first communication device (110a) to a second communication device (110b) as claimed in any preceding claim, further comprising:
at the second communication device (110b)
upon completion of receipt the list from the first communication device (110a), checking whether the list has been properly received by the second communication device (110b) using the code check provided in the initial data header; and
when the code check fails, requesting that the first communication device (110a) re-transmit the list.

10. The method of transmitting data from a first communication device (110a) to a second communication device (110b) as claimed in any preceding claim, further comprising:
at the second communication device (110b) generating on a GUI on a display of the second communication device (110b) the list, the GUI providing an option to retrieve an application from the list from the server (106) for the second communication device (110b).

11. The method of transmitting data from a first communication device (110a) to a second communication device (110b) as claimed in claim 10, wherein:
when the option to retrieve the application on the GUI on the display of the second communication device (110b) is activated, the server (106) evaluates whether the second communication device (110b) meets criteria for receiving the application; and
when the second communication device (110b) meets the criteria, the server (106) transmits the application to the second communication device (110b).

12. The method of transmitting data from a first communication device (110a) to a second communication device (110b) as claimed in claim 11, wherein:
the server (106) tracks a record of providing the application to the second communication device (110b) as a referral provided by the first communication device (110a).

13. A communication device (110) in a communication network, comprising:
a memory device (814) storing applications and data relating to the applications installed on the communication device;
a processor (802); and
an application management module (822F) configured to providing instructions to the processor effect the method steps of any preceding claim.

14. A method for use by a first communication device (110b) of receiving data relating to a second communication device (110a) from the second communication device (110a), the method comprising:
upon detection of a trigger condition,
identifying a list of applications available for download from the second communication device (110a) from the applications installed on the second communication device (110a) or on a server (106) based on a filter of applications installed on the second communication device (110a) or on the server (106); and
receiving a transmitted list of applications and initial header data (604) indicating an expected length and contents of the applications in the list and a code check at the first communication device (110b);
generating an import application list (606) from the list of applications that includes applications from the list of applications that are not currently installed on the first communication device (110b) and that are permitted to be installed on first communication device (110b);
generating the import application list (608) on a display of the first communication device (110b) in a graphical user interface ("GUI"); and
generating an option in the GUI to allow selection one or more of applications in the import application list for selection to be downloaded to the first communication device (110b).
